# EUROPÄISCHE PATENTSCHRIFT

(11) **EP 4 409 163 B1**
(45) Veröffentlichungstag und Bekanntmachung des Hinweises auf die Patenterteilung: **05.03.2025**
(21) Anmeldenummer: 22790534.6
(22) Anmeldetag: 28.09.2022
(51) Int. Cl.: F16H 57/021, F16H 57/04

(54) **ANTRIEBSEINRICHTUNG FÜR EIN KRAFTFAHRZEUG MIT EINEM IN EINEM MASCHINENGEHÄUSE AUSGEBILDETEN BETRIEBSMITTELTANK**
DRIVE DEVICE FOR A MOTOR VEHICLE HAVING AN OPERATING MEDIUM TANK FORMED IN A MACHINE HOUSING
DISPOSITIF D'ENTRAÎNEMENT POUR UN VÉHICULE AUTOMOBILE DOTÉ D'UN RÉSERVOIR DE FLUIDE DE TRAVAIL FORMÉ DANS UN CARTER DE MACHINE

(30) Priorität: 29.09.2021 DE 102021125200
(43) Veröffentlichungstag der Anmeldung: 07.08.2024
(73) Patentinhaber: Audi AG, 85057 Ingolstadt (DE)
(72) Erfinder: SZÉKELY, Béla, 9012 Györ (HU)
(86) Internationale Anmeldenummer: PCT/EP2022/076994
(87) Internationale Veröffentlichungsnummer: WO 2023/052431

(56) Entgegenhaltungen:
- WO-A1-2018/061443
- DE-A1- 102015 016 636
- JP-A- 2014 190 528
- US-A1- 2018 363 762
- US-B2- 10 746 282
- US-B2- 11 054 018

## Beschreibung

Die Erfindung betrifft eine Antriebseinrichtung für ein Kraftfahrzeug.

Aus dem Stand der Technik ist beispielsweise die Druckschrift DE 10 2016 215 184 A1 bekannt. Diese beschreibt ein Getriebe für ein Kraftfahrzeug, mit einem hydraulischen Getriebesteuergerät, einem Getriebegehäuse, einer an das Getriebegehäuse angebrachten Ölwanne und einer Leistungselektronik, die an dem Getriebegehäuse und/oder der Ölwanne abgestützt ist. Hierbei ist vorgesehen, dass das hydraulische Getriebesteuergerät und die Leistungselektronik bezogen auf eine Getriebemittelachse tangential und/oder axial zumindest abschnittsweise nebeneinander angeordnet sind. Das Dokument US 10 746 282 B2, zeigt eine Antriebsvorrichtung gemäß dem Oberbegriff des Anspruchs 1.

Es ist Aufgabe der Erfindung, eine Antriebseinrichtung für ein Kraftfahrzeug vorzuschlagen, welche gegenüber bekannten Antriebseinrichtungen Vorteile aufweist, insbesondere eine kostengünstige und schnelle Herstellung ermöglicht und zudem besonders kompakt aufgebaut ist.

Dies wird erfindungsgemäß mit einer Antriebseinrichtung für ein Kraftfahrzeug mit den Merkmalen des Anspruchs 1 erreicht. Dabei ist ein Maschinengehäuse vorgesehen, in dem ein Betriebsmittelverbraucher, ein Betriebsmitteltank und eine Betriebsmittelpumpe angeordnet sind, wobei in dem Maschinengehäuse ein Luftraum vorliegt, in welchen zumindest eine Maschinenwelle der Antriebseinrichtung hineinragt und der mittels einer Trennwand von dem benachbart zu dem Luftraum in in dem Maschinengehäuse ausgebildeten Betriebsmitteltank separiert ist.

Vorteilhafte Ausgestaltungen mit zweckmäßigen Weiterbildungen der Erfindung sind in den abhängigen Ansprüchen angegeben.

Die Antriebseinrichtung dient einem Antreiben des Kraftfahrzeugs, insoweit also dem Bereitstellen eines auf das Antreiben des Kraftfahrzeugs gerichteten Antriebsdrehmoments. Die Antriebseinrichtung verfügt hierzu vorzugsweise über ein Antriebsaggregat, welches zumindest zeitweise mit wenigstens einem Rad des Kraftfahrzeugs antriebstechnisch gekoppelt ist. Das Antriebsaggregat ist vorzugsweise zumindest teilweise in dem Maschinengehäuse angeordnet beziehungsweise von dem Maschinengehäuse aufgenommen. Beispielsweise liegt das Antriebsaggregat in Form einer elektrischen Maschine vor, die zumindest zeitweise als Elektromotor betrieben wird.

In dem Maschinengehäuse sind der Betriebsmittelverbraucher, der Betriebsmitteltank und die Betriebsmittelpumpe angeordnet. Unter dem Betriebsmittel ist ein zum Betreiben der Antriebseinrichtung verwendetes Mittel zu verstehen, welches vorzugsweise zumindest zeitweise oder - besonders bevorzugt - permanent in flüssiger Form vorliegt. Das Betriebsmittel ist insbesondere ein Schmiermittel. In diesem Fall kann der Betriebsmittelverbraucher auch als Schmiermittelverbraucher, der Betriebsmitteltank als Schmiermitteltank und die Betriebsmittelpumpe auch als Schmiermittelpumpe bezeichnet werden. Alternativ ist das Betriebsmittel ein Kühlmittel. Der Betriebsmittelverbraucher, der Betriebsmitteltank und die Betriebsmittelpumpe können dann entsprechend auch als Kühlmittelverbraucher, Kühlmitteltank und Kühlmittelpumpe benannt sein.

Beispielsweise liegt der Betriebsmittelverbraucher in Form des Antriebsaggregats und/oder eines Getriebes vor. Während eines Betriebs der Antriebseinrichtung wird dem Betriebsmittelverbraucher zumindest zeitweise Betriebsmittel zugeführt. Das Betriebsmittel dient einem Schmieren und/oder einem Temperieren des Betriebsmittelverbrauchers. Unter dem Begriff "Betriebsmittelverbraucher" Ist nicht zu verstehen, dass der Betriebsmittelverbraucher das Betriebsmittel tatsächlich verbraucht. Vielmehr nimmt der Betriebsmittelverbraucher das Betriebsmittel entgegen, insbesondere an einem Betriebsmitteleinlass, und stellt es nachfolgend, zumindest größtenteils, wieder bereit, vorzugsweise an einem Betriebsmittelauslass.

Das dem Betriebsmittelverbraucher zugeführte Betriebsmittel wird dem Betriebsmitteltank entnommen, welcher insoweit zum Zwischenspeichern des Betriebsmittels vorgesehen und ausgestaltet ist. Das Betriebsmittel wird nach seinem Zuführen zu dem Betriebsmittelverbraucher wieder dem Betriebsmitteltank zugeführt, nämlich mithilfe der Betriebsmittelpumpe. Das bedeutet, dass die Betriebsmittelpumpe zum Fördern des von dem Betriebsmittelverbraucher bereitgestellten Betriebsmittels in Richtung des Betriebsmitteltanks beziehungsweise in diesen hinein vorgesehen und ausgestaltet ist.

Vorzugsweise liegt wenigstens eine weitere Betriebsmittelpumpe vor, mittels welcher das Betriebsmittel aus dem Betriebsmitteltank entnommen und in Richtung des Betriebsmittelverbrauchers gefördert wird beziehungsweise dem Betriebsmittelverbraucher zugeführt wird. Beispielsweise sind in diesem Fall die Betriebsmittelpumpe und die weitere Betriebsmittelpumpe unabhängig voneinander betreibbar, sodass mittels der Betriebsmittelpumpe das Betriebsmittel dem Betriebsmitteltank zugeführt und mithilfe der weiteren Betriebsmittelpumpe aus dem Betriebsmitteltank entnommen und in Richtung des Betriebsmittelverbrauchers gefördert werden kann. Bevorzugt werden die Betriebsmittelpumpe und die weitere Betriebsmittelpumpe jedoch gemeinsam betrieben. Insbesondere werden sie von einem gemeinsamen Antrieb angetrieben.

Um eine besonders kompakte Ausgestaltung der Antriebseinrichtung zu erzielen und diese zudem einfach und kostengünstig herstellen zu können, ist der Betriebsmitteltank in dem Maschinengehäuse ausgebildet, es liegt also kein separater Betriebsmitteltank außerhalb des Maschinengehäuses vor. Der Betriebsmitteltank ist zudem vollständig in dem Maschinengehäuse angeordnet.

Der Betriebsmitteltank liegt benachbart zu dem Luftraum vor, in welchen die zumindest eine Maschinenwelle der Antriebseinrichtung hineinragt.

Das Maschinengehäuse weist einen Grundkörper auf, an welchem ein Maschinengehäusedeckel zum Verschließen des Luftraums und des Betriebsmitteltanks angeordnet und/oder befestigt ist. Der Luftraum und der Betriebsmitteltank sind insoweit jeweils einerseits von einer Wand des Grundkörpers und andererseits von dem an dem Grundkörper angeordneten beziehungsweise befestigten Maschinengehäusedeckel begrenzt. Der Luftraum wird zumindest bereichsweise von dem Maschinengehäuse eingefasst. Besonders bevorzugt ist der Luftraum gegenüber einer Außenumgebung fluiddicht abgeschlossen. Vorzugsweise ist hierzu der Maschinengehäusedeckel fluiddicht an dem Grundkörper befestigt, sodass der Luftraum einerseits von dem Grundkörper beziehungsweise dessen Wand und andererseits von dem Maschinengehäusedeckel begrenzt ist, insbesondere in axialer Richtung der Maschinenwelle.

Zwischen dem Luftraum und dem Betriebsmitteltank ist die Trennwand angeordnet, um den Betriebsmitteltank und den Luftraum zumindest bereichsweise strömungstechnisch zu separieren. Die Trennwand geht bevorzugt von dem Grundkörper beziehungsweise dessen Wand aus und erstreckt sich von diesem fort, insbesondere in Richtung des Maschinengehäusedeckels. Besonders bevorzugt liegt die Trennwand nach der Montage des Maschinengehäusedeckels an dem Grundkörper fluiddicht an dem Maschinengehäusedeckel an, um den Luftraum und den Betriebsmitteltank strömungstechnisch voneinander zu separieren.

**In** dem Luftraum liegt zumindest bereichsweise die Maschinenwelle der Antriebseinrichtung vor. Die Maschinenwelle ist beispielsweise Bestandteil des Antriebsaggregats, insbesondere stellt sie eine Antriebswelle des Antriebsaggregats dar. Beispielsweise weist die Maschinenwelle in dem Luftraum eine Verzahnung auf, über welche sie mit wenigstens einer anderen Welle der Antriebseinrichtung antriebstechnisch gekoppelt ist. Beispielsweise dient die Verzahnung dem festsetzen eines Zahnrads bezüglich der Maschinenwelle in Umfangsrichtung. Hierzu verfügt das Zahnrad über eine Gegenverzahnung, welche formschlüssig mit der Verzahnung der Maschinenwelle zusammenwirkt.

Vorzugsweise ragt die Maschinenwelle durch die Wand des Grundkörpers in den Luftraum hinein, insbesondere ist die Maschinenwelle an der Wand drehbar gelagert. Hierbei liegt bevorzugt eine Lagerausnehmung in der Wand vor, die von der Maschinenwelle durchgriffen ist. Ebenfalls ist ein Lager in der Lagerausnehmung angeordnet, mittels welchem die Maschinenwelle an der Wand drehbar gelagert ist. Das Lager liegt insbesondere als Gleitlager oder als Wälzlager vor.

Es kann vorgesehen sein, dass ein Volumeninhalt des Betriebsmitteltanks genauso groß oder zumindest in etwa genauso groß wie ein Volumeninhalt des Luftraums ist. Vorzugsweise entspricht der Volumeninhalt des Betriebsmitteltanks jedoch mindestens 20 %, mindestens 30 %, mindestens 40 % oder mindestens 50 % des Volumeninhalts des Luftraums. Hierdurch wird eine hinreichende Größe des Betriebsmitteltanks erzielt.

Eine Weiterbildung der Erfindung sieht vor, dass die Betriebsmittelpumpe saugseitig über einen Saugkanal an den Betriebsmittelverbraucher und druckseitig über einen Druckkanal an den Betriebsmitteltank und der Betriebsmitteltank über einen Vorlaufkanal an den Betriebsmittelverbraucher strömungstechnisch angeschlossen ist, wobei der Saugkanal, der Druckkanal und der Vorlaufkanal jeweils unter Ausbildung einer Öffnung offen in einem Grundkörper des Maschinengehäuses ausgebildet und die Öffnungen mittels eines an dem Grundkörper befestigten Abschlussdeckels strömungstechnisch separat voneinander abgedeckt sind.

Beispielsweise ist es vorgesehen, dass die Betriebsmittelpumpe einerseits über den Saugkanal an den Betriebsmittelverbraucher angeschlossen ist. Das bedeutet, dass die Betriebsmittelpumpe über den Saugkanal das Betriebsmittel von dem Betriebsmittelverbraucher beziehungsweise dessen Betriebsmittelauslass in Richtung des Betriebsmitteltanks fördert. Andererseits ist die Betriebsmittelpumpe vorzugsweise über den Druckkanal an den Betriebsmitteltank angebunden. Über den Saugkanal saugt die Betriebsmittelpumpe insoweit das Betriebsmittel aus Richtung des Betriebsmittelverbrauchers an und fördert es über den Druckkanal in Richtung des Betriebsmitteltanks beziehungsweise in diesen hinein.

Vorzugsweise sind sowohl der Saugkanal als auch der Druckkanal unmittelbar an die Betriebsmittelpumpe angeschlossen, erstrecken sich also in Strömungsrichtung ausgehend von dieser. Ebenso kann es vorgesehen sein, dass sich der Saugkanal bis an den Betriebsmittelauslass des Betriebsmittelverbrauchers und der Druckkanal bis hin zu dem Betriebsmitteltank erstreckt. Vorzugsweise ist jedoch der Saugkanal von dem Betriebsmittelauslass und der Druckkanal von dem Betriebsmitteltank beabstandet angeordnet, sodass sie sich lediglich teilweise bis hin zu dem jeweiligen Element erstrecken.

Es kann vorgesehen sein, dass der Betriebsmitteltank und der Betriebsmittel Verbraucher über einen Vorlaufkanal strömungstechnisch aneinander angeschlossen sind. Entlang einer strömungstechnischen Verbindung zwischen dem Betriebsmitteltank und dem Betriebsmittel Verbraucher liegt also der Vorlaufkanal vor. Es kann vorgesehen sein, dass der Vorlaufkanal unmittelbar von dem Betriebsmitteltank ausgeht und sich bis hin zu dem Betriebsmittelverbraucher erstreckt. Es kann jedoch auch vorgesehen sein, dass der Vorlaufkanal entweder von dem Betriebsmitteltank oder dem Betriebsmittelverbraucher oder von beiden strömungstechnisch beabstandet ist, also lediglich einen Teil der Strömungsverbindung mit ausbildet.

In einer optionalen Ausgestaltung der Antriebseinrichtung sind der Saugkanal, der Druckkanal und der Vorlaufkanal jeweils zumindest bereichsweise in dem Maschinengehäuse ausgebildet. Für jeden der Kanäle liegt in dem Maschinengehäuse also eine korrespondierende Ausnehmung vor, die über die jeweilige Öffnung offen ist. Die Öffnung stellt insoweit eine Mündungsöffnung dar, über welche der jeweilige Kanal beziehungsweise die jeweilige Ausnehmung zunächst in eine Außenumgebung des Grundkörpers einmündet, nämlich solange der Abschlussdeckel nicht an dem Grundkörper befestigt ist, also bei nicht an dem Grundkörper befestigtem Abschlussdeckel. In anderen Worten sind die Ausnehmungen in Richtung des Abschlussdeckels offen und weisen dort ihre jeweilige Öffnung auf. Die Ausnehmungen in dem Maschinengehäuse, also der Saugkanal, der Druckkanal und der Vorlaufkanal, werden bevorzugt während eines Gießvorgangs des Maschinengehäuses hergestellt. Das Maschinengehäuse liegt in diesem Fall als Gussteil vor.

Es kann vorgesehen sein, dass die Ausnehmungen lediglich einen Teil der Kanäle bilden. Beispielsweise mündet ein Abschnitt des jeweiligen Kanals in die entsprechende Ausnehmung des Maschinengehäuses ein. Es kann insbesondere vorgesehen sein, dass ein erster Abschnitt eines der Kanäle an einer ersten Stelle in die Ausnehmung einmündet und ein zweiter Abschnitt an einer von der ersten Stelle beabstandeten zweiten Stelle von der Ausnehmung ausgeht, sodass die beiden Abschnitte über die Ausnehmung strömungstechnisch aneinander angebunden sind beziehungsweise in Strömungsverbindung miteinander stehen. Der Abschnitt beziehungsweise wenigstens einer der Abschnitte des jeweiligen Kanals wird bevorzugt ebenfalls während des Gießens ausgebildet oder ist alternativ als Bohrung ausgestaltet.

Es kann vorgesehen sein, dass die Kanäle beziehungsweise die Ausnehmungen zunächst offen in dem Maschinengehäuse vorliegen. Aus diesem Grund wird der Abschlussdeckel an dem Grundkörper befestigt, nämlich derart, dass die Öffnungen vollständig übergriffen und somit abgedeckt beziehungsweise dicht verschlossen sind. Mittels des Abschlussdeckels werden die Kanäle also strömungstechnisch separat voneinander abgedeckt. Hierunter ist insbesondere zu verstehen, dass die Kanäle über ihre Öffnungen nicht in Strömungsverbindung miteinander stehen, sondern das eine solche Strömungsverbindung von dem Abschlussdeckel unterbrochen ist.

Der Abschlussdeckel dient einem gemeinsamen Abdecken beziehungsweise Verschließen der Öffnungen, sodass also zum Vervollständigen der Kanäle lediglich ein einziges Element, nämlich der Abschlussdeckel, an dem Grundkörper befestigt werden muss. Es ist mithin nicht notwendig, unterschiedliche Verschlusselemente separat an dem Maschinengehäuse anzubringen und/oder zu befestigen. Dies ermöglicht eine besonders rasche Herstellung der Antriebseinrichtung und bedeutet auch eine deutliche Vereinfachung der Montage der Antriebseinrichtung.

Besonders bevorzugt ist der Abschlussdeckel mit dem Maschinengehäuse verschraubt, also mittels wenigstens einer Schraube oder eines Bolzens an diesem befestigt. Hierdurch wird ein zuverlässiges und dauerhaft dichtes Abdecken beziehungsweise Verschließen der Öffnungen mithilfe des Abschlussdeckels realisiert. Insgesamt ist es für die beschriebene Antriebseinrichtung ohne weiteres möglich, die Kanäle zunächst auf besonders einfache Art und Weise in dem Maschinengehäuse zumindest teilweise auszubilden, insbesondere während eines Gießvorgangs, bei welchem das Maschinengehäuse hergestellt wird.

Nachfolgend wird der Abschlussdeckel zum gemeinsamen Abdecken beziehungsweise Verschließen der Öffnungen der Kanäle beziehungsweise der Ausnehmungen an dem Grundkörper angeordnet und an ihm befestigt. Durch die Anordnung des Abschlussdeckels werden insoweit die mehreren Kanäle gleichzeitig realisiert beziehungsweise vervollständigt. Der Abschlussdeckel begrenzt die Kanäle also jeweils zum des bereichsweise beziehungsweise stellt ein strömungsführendes Element für die Kanäle dar.

Gemäss der Erfindung ist in der Trennwand eine Überlauföffnung ausgebildet, über die der Betriebsmitteltank strömungstechnisch an den Luftraum angebunden ist. Die Trennwand separiert also den Luftraum nicht vollständig von dem Betriebsmitteltank beziehungsweise umgekehrt, sondern über die Überlauföffnung wird gerade eine strömungstechnische Verbindung zwischen dem Betriebsmitteltank und dem Luftraum hergestellt. Hierdurch kann ein Druckausgleich zwischen dem Betriebsmitteltank und dem Luftraum erfolgen, sodass eine Füllstandsänderung in dem Betriebsmitteltank ohne eine deutliche Änderung des in ihm vorliegenden Drucks möglich ist.

Die Überlauföffnung ist bei bestimmungsgemäßer Anordnung des Maschinengehäuses beziehungsweise der Antriebseinrichtung in einer oberen Hälfte der Trennwand angeordnet. Vorzugsweise liegt die Überlauföffnung an einem oberen Ende der Trennwand vor. Insbesondere ist die Überlauföffnung bei bestimmungsgemäßer Anordnung der Antriebseinrichtung und bei bestimmungsgemäßem Füllstand des Betriebsmitteltanks oberhalb eines Betriebsmittelpegels in dem Betriebsmitteltank angeordnet, sodass zwar Luft ohne weiteres zwischen dem Betriebsmitteltank und dem Luftraum strömen kann, das in den Betriebsmitteltank befindliche Betriebsmittel jedoch zuverlässig durch Schwerkrafteinfluss in diesem gehalten ist.

Eine Weiterbildung der Erfindung sieht vor, dass zumindest ein Teilbereich der Überlauföffnung bei bestimmungsgemäßer Anordnung der Antriebseinrichtung einen Bereich des Luftraums übergreift. In anderen Worten ist die Überlauföffnung zumindest bereichsweise oberhalb des Luftraums angeordnet und entsprechend auch der Betriebsmitteltank. Hierzu ist die Trennwand entsprechend ausgestaltet und angeordnet. Eine solche Anordnung der Überlauföffnung ermöglicht ein zuverlässiges Abfließen von Betriebsmittel in den Luftraum, sollte es von Zeit zu Zeit doch zu einem Übertreten von Betriebsmittel aus dem Betriebsmitteltank in den Luftraum durch die Überlauföffnung kommen.

Eine Weiterbildung der Erfindung sieht vor, dass die Überlauföffnung zumindest mit einem Teilbereich in einem Bereich der Trennwand vorliegt, der in Richtung des Luftraums geneigt angeordnet ist. Die den Luftraum übergreifende Anordnung der Überlauföffnung ist also durch die Neigung der Trennwand beziehungsweise des Bereichs der Trennwand realisiert. Bei bestimmungsgemäßer Anordnung der Antriebseinrichtung ist der Bereich der Trennwand von unten nach oben gesehen in Richtung des Luftraums geneigt, sodass also der Bereich der Trennwand umso weiter in den Luftraum eingreift, je weiter oben er vorliegt. Gegenüber einer vertikalen Ebene ist der Bereich der Trennwand beispielsweise um einen Winkel von mindestens 15° und höchstens 75°, mindestens 30° und höchstens 60° oder in etwa oder genau 45° geneigt. Hierdurch werden die bereits beschriebenen Vorteile erzielt.

Eine Weiterbildung der Erfindung sieht vor, dass der Betriebsmitteltank im Querschnitt bezüglich einer Drehachse der Maschinenwelle gesehen auf gegenüberliegenden Seiten der Maschinenwelle vorliegt. Eine gedachte Ebene, beispielsweise die vorstehend bereits erwähnte vertikale Ebene, welche die Drehachse der Maschinenwelle vollständig in sich aufnimmt, schneidet also den Betriebsmitteltank derart, dass ein Teil seines Volumeninhalts auf einer ersten Seite der Ebene und ein zweiter Teil seines Volumeninhalts auf einer der ersten Seite der Ebene abgewandten zweiten Seite der Ebene angeordnet ist.

Besonders bevorzugt schneidet die Ebene den Betriebsmitteltank an voneinander beabstandeten Stellen, nämlich auf gegenüberliegenden Seiten der Drehachse. Beispielsweise liegt hierbei bei bestimmungsgemäßer Anordnung der Antriebseinrichtung der Betriebsmitteltank sowohl unterhalb als auch oberhalb der Drehachse der Maschinenwelle vor. Hierdurch wird trotz des Hineinragens der Maschinenwelle in den Luftraum ein hinreichend großer Volumeninhalt des Betriebsmitteltanks erzielt.

Eine Weiterbildung der Erfindung sieht vor, dass der Betriebsmitteltank die Maschinenwelle im Querschnitt gesehen um mindestens 180°, mindestens 195°, mindestens 210° oder mindestens 225° umgreift. Der Winkelbereich, über welchen sich der Betriebsmitteltank bezogen auf die Drehachse der Maschinenwelle erstreckt, verläuft sich von einem ersten äußersten Ende des Betriebsmitteltanks bis hin zu einer zweiten äußersten Ende des Betriebsmitteltanks. Durch das Umgreifen um einen der genannten Werte wird ein besonders großer Volumeninhalt des Betriebsmitteltanks realisiert.

Eine Weiterbildung der Erfindung sieht vor, dass im Querschnitt gesehen eine Breite der Überlauföffnung in einer bei bestimmungsgemäßer Anordnung der Antriebseinrichtung horizontalen Richtung höchstens 10 %, höchstens 7,5 %, höchstens 5 % oder höchstens 2,5 % einer maximalen Breite des Betriebsmitteltanks in derselben Richtung über seine gesamte Höhe hinweg entspricht, und/oder dass im Querschnitt gesehen die Breite der Überlauföffnung in einer bei bestimmungsgemäßer Anordnung der Antriebseinrichtung horizontalen Richtung höchstens 10 %, höchstens 7,5 %, höchstens 5 % oder höchstens 2,5 % einer in einer senkrecht auf der horizontalen Richtung stehenden vertikalen Richtung vorliegenden Höhe des Betriebsmitteltanks entspricht.

Unter der Breite der Überlauföffnung ist ihre Erstreckung im Querschnitt gesehen in horizontaler Richtung bei bestimmungsgemäßer Anordnung der Antriebseinrichtung zu verstehen. Die maximale Breite des Mitteltanks beschreibt seine maximalen Abmessungen in der gleichen Richtung über seine gesamte Höhe hinweg, also in der auf der horizontalen Richtung senkrecht stehenden vertikalen Richtung. Durch die Begrenzung der Breite der Überlauföffnung auf einen der genannten Anteile an der maximalen Breite des Betriebsmitteltanks wird eine hinreichend kleine Überlauföffnung erzielt, um zwar einen zuverlässigen Druckausgleich zwischen dem Betriebsmitteltank und dem Luftraum sicherzustellen, ein ungewolltes Übertreten von Betriebsmittel aus dem Betriebsmitteltank in Richtung des Luftraums jedoch zu verhindern.

Zusätzlich oder alternativ entspricht im Querschnitt gesehen die Breite der Überlauföffnung einem der genannten Anteile an der Höhe des Betriebsmitteltanks. Die Höhe liegt in der vertikalen Richtung vor, welche senkrecht auf der horizontalen Richtung steht. Auch diese Begrenzung der Breite der ÜberlaufÖffnung dient der Realisierung des vorstehend formulierten Ziels.

Eine Weiterbildung der Erfindung sieht vor, dass der Betriebsmittelverbraucher über einen Vorlaufkanal, der über eine Vorlaufmündungsöffnung in den Betriebsmitteltank einmündet, und über einen Betriebsmittelsumpf an einen Rücklaufkanal, der über eine Rücklaufmündungsöffnung in den Betriebsmitteltank einmündet, strömungstechnisch angeschlossen ist, wobei im Querschnitt gesehen die Überlauföffnung auf der der Vorlaufmündungsöffnung abgewandten Seite der Rücklaufmündungsöffnung angeordnet ist. Der Vorlaufkanal und der Rücklaufkanal dienen dem strömungstechnischen Anbinden des Betriebsmittelverbrauchers an den Betriebsmitteltank.

Über den Vorlaufkanal, genauer gesagt über dessen Vorlaufmündungsöffnung, wird dem Betriebsmitteltank Betriebsmittel entnommen und dem Betriebsmittelverbraucher zugeführt. Von dem Betriebsmittelverbraucher gelangt das Betriebsmittel in den Betriebsmittelsumpf, aus welchem es über den Rücklaufkanal in Richtung des Betriebsmitteltanks gefördert wird. Das Betriebsmittel tritt über die Rücklaufmündungsöffnung des Rücklaufkanals wieder in den Betriebsmitteltank ein. Sowohl die Vorlaufmündungsöffnung als auch die Rücklaufmündungsöffnung sind insoweit in dem Betriebsmitteltank angeordnet oder münden zumindest in diesem ein.

Im Querschnitt gesehen soll nun der Rücklaufmündungsöffnung zwischen der Überlauföffnung und der Vorlaufmündungsöffnung angeordnet sein, sodass schlussendlich die Überlauföffnung bei bestimmungsgemäßer Anordnung der Antriebseinrichtung oberhalb der Rücklaufmündungsöffnung vorliegt, welche wiederum oberhalb der Vorlaufmündungsöffnung angeordnet ist. Hierdurch werden ein zuverlässiges Bereitstellen des Betriebsmittels und ein Austreten des Betriebsmittels aus dem Betriebsmitteltank in Richtung des Luftraums zuverlässig unterbunden.

Eine Weiterbildung der Erfindung sieht vor, dass der Rücklaufkanal eine in der Trennwand ausgebildete Durchtrittsausnehmung durchgreift. In der Trennwand ist also die Durchtrittsausnehmung ausgebildet, insbesondere zusätzlich zu der Überlauföffnung. Die Durchtrittsausnehmung dient dem Hindurchtreten des Rücklaufkanals aus dem Luftraum in den Betriebsmitteltank. Vorzugsweise ist der Rücklaufkanal dicht in der Durchtrittsausnehmung angeordnet, sodass also zwar durch den Rücklaufkanal Betriebsmittel in den Betriebsmitteltank eingebracht werden kann, entlang des Rücklaufkanals jedoch kein Betriebsmittel durch die Durchtrittsausnehmung hindurch aus dem Betriebsmitteltank in den Luftraum gelangen kann. Eine solche Ausgestaltung der Antriebseinrichtung ermöglicht eine besonders kompakte Bauform.

Eine Weiterbildung der Erfindung sieht vor, dass der Luftraum im Längsschnitt bezüglich der Drehachse der Maschinenwelle gesehen einerseits von einer Wand des Maschinengehäuses und andererseits von einem an dem Maschinengehäuse befestigten Maschinengehäusedeckel begrenzt ist, wobei - wiederum im Längsschnitt gesehen - die Wand des Maschinengehäuses und der Maschinengehäusedeckel gleichsinnig gekrümmt und/oder angewinkelt sind. Auf die Anordnung des Luftraums und - optional - auch des Betriebsmitteltanks zwischen der Wand des Maschinengehäuses beziehungsweise des Grundkörpers des Maschinengehäuses und dem Maschinengehäusedeckel wurde bereits hingewiesen. Sowohl die Wand als auch der Maschinengehäusedeckel sind im Längsschnitt gesehen gekrümmt und/oder angewinkelt. Die Krümmung beziehungsweise Anwinkelung sind hierbei gleichsinnig. Hierdurch wird eine kompakte und gleichzeitig äußerst stabile Ausgestaltung der Antriebseinrichtung beziehungsweise ihres Maschinengehäuses erzielt.

Eine Weiterbildung der Erfindung sieht vor, dass sich im Längsschnitt gesehen der Maschinengehäusedeckel in radialer Richtung von außen nach innen weiter in die von dem Betriebsmitteltank abgewandte Richtung erstreckt als die Wand des Maschinengehäuses, sodass ein Abstand zwischen dem Maschinengehäusedeckel und der Wand des Maschinengehäuses in radialer Richtung von außen nach innen zunimmt. Das Krümmen beziehungsweise Anwinkeln der Wand und des Maschinengehäusedeckels ist insoweit derart umgesetzt, dass sie im Längsschnitt gesehen in radialer Richtung nach außen aufeinander zu laufen beziehungsweise ihr Abstand in radialer Richtung nach innen zunimmt. Hierdurch wird ein besonders großer Volumeninhalt des Betriebsmitteltanks erzielt.

Eine Weiterbildung der Erfindung sieht vor, dass auf einer dem Luftraum abgewandten Seite der Wand des Maschinengehäuses eine Trennkupplung angeordnet ist, über die die Maschinenwelle und/oder eine mit der Maschinenwelle antriebstechnisch gekoppelte weitere Maschinenwelle antriebstechnisch an einen Abtriebsflansch der Antriebseinrichtung angeschlossen ist. Die Maschinenwelle beziehungsweise die weitere Maschinenwelle sind bevorzugt vollständig in dem Maschinengehäuse angeordnet, erstrecken sich also nicht aus diesem heraus. Der Abtriebsflansch hingegen ist außerhalb des Maschinengehäuses angeordnet oder zumindest von außerhalb des Maschinengehäuses zugänglich. Über den Abtriebsflansch stellt die Antriebseinrichtung zumindest zeitweise das von ihr erzeugte Antriebsdrehmoment zur Verfügung.

Die Maschinenwelle beziehungsweise die weitere Maschinenwelle ist antriebstechnisch an den Abtriebsflansch angeschlossen. Insoweit ist zumindest zeitweise das Antriebsaggregat über die Maschinenwelle und/oder die weitere Maschinenwelle mit dem Abtriebsflansch antriebstechnisch gekoppelt. Die Anbindung des Abtriebsflanschs an die Maschinenwelle beziehungsweise die weitere Maschinenwelle liegt über die Trennkupplung vor. **In** einer ersten Einstellung der Trennkupplung ist die Maschinenwelle beziehungsweise die weitere Maschinenwelle antriebstechnisch mit dem Abtriebsflansch gekoppelt, insbesondere starr. **In** einer zweiten Einstellung der Trennkupplung ist hingegen die Maschinenwelle beziehungsweise die weitere Maschinenwelle antriebstechnisch von dem Abtriebsflansch entkoppelt.

Aufgrund der Anordnung des Betriebsmitteltanks in dem Maschinengehäuse entfällt der ansonsten außerhalb des Maschinengehäuses notwendige Betriebsmitteltank. Das bedeutet, dass anstelle dieses externen Betriebsmitteltanks ein Aktuator an dem Maschinengehäuse angeordnet werden kann, mittels welchem die Trennkupplung schaltbar ist. Das bedeutet, dass der Aktuator außen Maschinengehäuse befestigt ist, wohingegen sich die Trennkupplung in dem Maschinengehäuse befindet. Hierdurch wird die Antriebseinrichtung nochmals kompakter ausgeführt.

Die in der Beschreibung beschriebenen Merkmale und Merkmalskombinationen, insbesondere die in der nachfolgenden Figurenbeschreibung beschriebenen und/oder in den Figuren gezeigten Merkmale und Merkmalskombinationen, sind nicht nur in der jeweils angegebenen Kombination, sondern auch in anderen Kombinationen oder in Alleinstellung verwendbar, ohne den Rahmen der Erfindung zu verlassen. Es sind somit auch Ausführungsformen als von der Erfindung umfasst anzusehen, die in der Beschreibung und/oder den Figuren nicht explizit gezeigt oder erläutert sind, jedoch aus den erläuterten Ausführungsformen hervorgehen oder aus ihnen ableitbar sind.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: eine schematische Darstellung einer Antriebseinrichtung für ein Kraftfahrzeug,
- Figur 2: eine Längsschnittdarstellung durch die Antriebseinrichtung, sowie
- Figur 3: eine weitere Längsschnittdarstellung durch die Antriebseinrichtung.

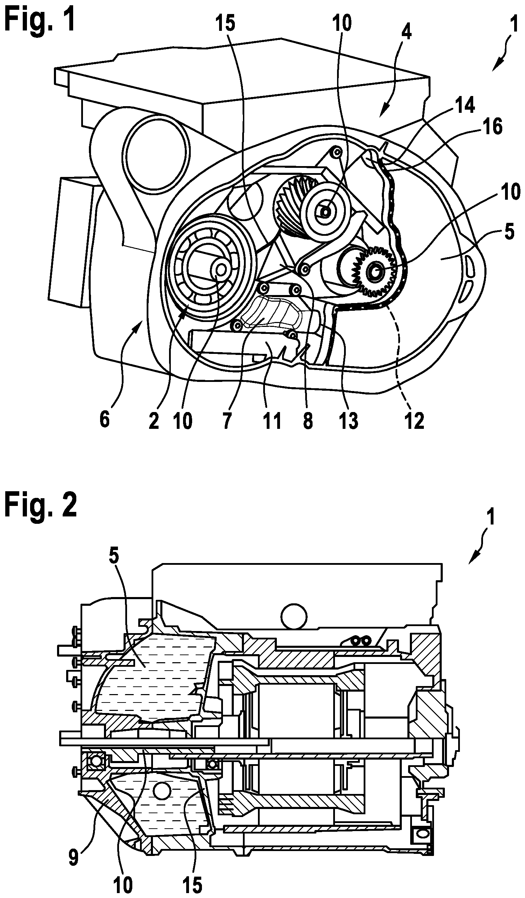

Die Figur 1 zeigt eine schematische Darstellung einer Antriebseinrichtung 1 für ein nicht näher dargestelltes Kraftfahrzeug. Die Antriebseinrichtung 1 weist ein Antriebsaggregat 2 auf, das in dem hier dargestellten Ausführungsbeispiel als elektrische Maschine vorliegt und entsprechend einen Stator sowie einen Rotor 4 aufweist. Weiterhin verfügt die Antriebseinrichtung 1 über ein nicht näher dargestelltes Getriebe, das über mehrere Getriebestufen verfügt. Vorzugsweise ist das Antriebsaggregat 2 über das Getriebe mit einer Ausgangswelle der Antriebseinrichtung 1 antriebstechnisch verbunden, vorzugsweise über einen hier nicht erkennbaren Abtriebsflansch 3 der Antriebseinrichtung 1, wobei mit der Ausgangswelle wiederum zumindest ein Rad des Kraftfahrzeugs antriebstechnisch koppelbar ist. Sowohl das Antriebsaggregat 2 als auch das Getriebe sind in einem Maschinengehäuse 4 der Antriebseinrichtung 1 angeordnet.

Während eines Betriebs der Antriebseinrichtung 1 wird dem Antriebsaggregat 2 und dem Getriebe zumindest zeitweise Betriebsmittel zur Schmierung und/oder zur Temperierung zugeführt. Hierzu weisen das Antriebsaggregat 2 und das Getriebe entsprechende Betriebsmittelzuführeinrichtungen auf. Das Antriebsaggregat 2 und das Getriebe stellen insoweit Betriebsmittelverbraucher dar. Diesen wird zumindest zeitweise Betriebsmittel aus einem Betriebsmitteltank 5 zugeführt. Das den Betriebsmittelverbrauchern zugeführte Betriebsmittel tritt nach dem Schmieren und/oder Temperieren in einen Betriebsmittelsumpf aus und wird aus diesem mittels einer Betriebsmittelpumpe erneut in Richtung des Betriebsmitteltanks 5 gefördert. Im Rahmen des hier beschriebenen Ausführungsbeispiels ist es vorgesehen, dass dem Antriebsaggregat 2 das Betriebsmittel mittels einer ersten weiteren Betriebsmittelpumpe und dem Getriebe mittels einer zweiten weiteren Betriebsmittelpumpe zugeführt wird.

Die Betriebsmittelpumpe ist über einen Saugkanal an den Betriebsmittelsumpf und mithin an die Betriebsmittelverbraucher strömungstechnisch angeschlossen, nämlich saugseitig. Druckseitig ist die Betriebsmittelpumpe über einen Druckkanal und eine Betriebsmittelleitung an den Betriebsmitteltank 5 angebunden. Schließlich ist ein Vorlaufkanal vorgesehen, über welchen der Betriebsmitteltank 5 an die Betriebsmittelverbraucher angebunden ist, nämlich über die weiteren Betriebsmittelpumpen. In dem ihr dargestellten Ausführungsbeispiel ist es vorgesehen, die Betriebsmittelpumpe sowie die weiteren Betriebsmittelpumpen mittels eines gemeinsamen Antriebs anzutreiben, der insoweit auch als Betriebsmittelpumpenantrieb oder Ölpumpenantrieb bezeichnet werden kann. Der Antrieb verfügt beispielsweise über einen Elektromotor oder ist als solcher ausgestaltet.

Es ist vorgesehen, dass der Saugkanal, der weitere Saugkanal, der Druckkanal und der Vorlaufkanal jeweils in einem Grundkörper 6 des Maschinengehäuses 4, der auch als Getriebegehäuse bezeichnet werden kann, ausgebildet sind, nämlich jeweils unter Ausbildung einer hier nicht erkennbaren Öffnung. Die Öffnungen der genannten Kanäle sind mittels eines an dem Grundkörper 6 befestigten Abschlussdeckels 7, welcher lediglich angedeutet ist, strömungstechnisch separat voneinander abgedeckt beziehungsweise verschlossen.

Der Grundkörper 6 des Maschinengehäuses 4 schließt einen Luftraum 8 mit ein, nämlich gemeinsam mit einem hier nicht dargestellten Maschinengehäusedeckel, 9, der an dem Grundkörper 6 befestigt ist. In den Luftraum 8 greift wenigstens eine Maschinenwelle 10 ein, in dem dargestellten Ausführungsbeispiel mehrere Maschinenwellen 10. An dem Abschlussdeckel 7 ist ein Saugstutzen 11 angeordnet, welcher über den Abschlussdeckel 7 mit dem weiteren Saugkanal strömungstechnisch verbunden ist. Der Saugstutzen 11 ragt in Richtung eines Bodens des Maschinengehäuses 4 in dem Luftraum 8, sodass über den Saugstutzen 11 in dem Luftraum 8 vorliegendes Betriebsmittel über den weiteren Saugkanal, die Betriebsmittelpumpe, den Druckkanal sowie die Betriebsmittelleitung in den Betriebsmitteltank 5 gefördert werden kann. Die Betriebsmittelleitung kann im Übrigen auch als Rücklaufkanal beziehungsweise Rücklaufleitung bezeichnet werden.

Der Betriebsmitteltank 5 ist separat von dem Luftraum 8 in dem Maschinengehäuse 4 ausgebildet und mittels einer Trennwand 12 von ihm separiert. **In** der Trennwand ist eine Durchtrittsausnehmung 13 ausgebildet, die von der Betriebsmittelleitung durchgriffen ist, um den Druckkanal strömungstechnisch an den Betriebsmitteltank 5 anzubinden. In der Trennwand ist eine Überlauföffnung 14 ausgebildet, über die der Betriebsmitteltank 5 strömungstechnisch an den Luftraum 8 angebunden ist. In bestimmungsgemäßer Einbaulage der Antriebseinrichtung 1 ist die Überlauföffnung 14 an einem geodätisch oberen Ende der Trennwand 12 oder zumindest in einer oberen Hälfte der Trennwand 12 angeordnet. Hierdurch wird ein übermäßiges Übertreten von Betriebsmittel aus dem Betriebsmitteltank 5 in Richtung des Luftraums 8 verhindert.

Sowohl der Betriebsmitteltank 5 als der Luftraum 8 sind in axialer Richtung bezüglich einer Drehachse der Maschinenwelle 10 einerseits von einer Wand 15 des Grundkörper 6 und andererseits von dem Maschinengehäusedeckel 9 begrenzt. Der Betriebsmitteltank 5 weist einen Volumeninhalt auf, welcher mindestens 20 %, mindestens 30 %, mindestens 40 % oder mindestens 50 % eines Volumeninhalts des Luftraums 8 entspricht. Die Überlauföffnung 14 ist zudem derart angeordnet, dass sie den Luftraum 8 zumindest bereichsweise übergreift. Hierdurch ist ein Bereich 16 der Trennwand geneigt angeordnet, nämlich insbesondere derart, dass es sich bei bestimmungsgemäßer Anordnung der Antriebseinrichtung 1 nach oben immer weiter in den Luftraum 8 hinein erstreckt.

Die Figur 2 zeigt eine schematische Längsschnittdarstellung der Antriebseinrichtung 1. Erkennbar ist wiederum der Betriebsmitteltank 5, der einerseits von der Wand 15 und andererseits von dem Maschinengehäusedeckel 9 begrenzt ist. Es ist erkennbar, dass die Wand 15 und der Maschinengehäusedeckel 9 gleichsinnig gekrümmt beziehungsweise angewinkelt sind. Hierbei soll in dem dargestellten Längsschnitt der Abstand zwischen der Wand 15 und dem Maschinengehäusedeckel 9 in radialer Richtung von außen nach innen bezüglich der Maschinenwelle 10 zunehmen.

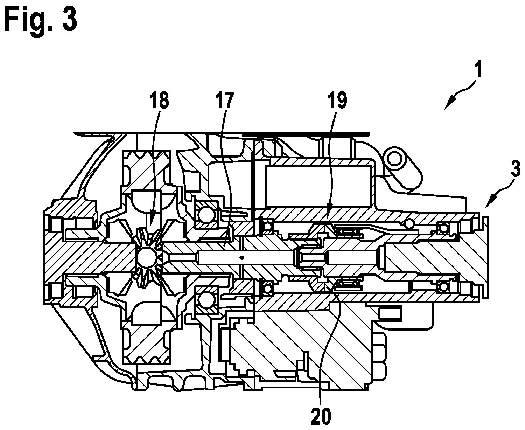

Die Figur 3 zeigt eine weitere schematische Längsschnittdarstellung der Antriebseinrichtung 1. Erkennbar ist eine weitere Maschinenwelle 17, die mit der Maschinenwelle 10 antriebstechnisch gekoppelt ist, beispielsweise über ein Differenzialgetriebe 18. Die weitere Maschinenwelle 17 ist antriebstechnisch an den Abtriebsflansch 3 der Antriebseinrichtung 1 angebunden, nämlich über eine Trennkupplung 19. Die Trennkupplung 19 verfügt in dem hier dargestellten Ausführungsbeispiel über eine Verschiebeklaue 20, wobei in einer ersten Stellung der Verschiebeklaue 20 der Abtriebsflansch 3 starr mit der weiteren Maschinenwelle 17 antriebstechnisch gekoppelt und in einer zweiten Stellung antriebstechnisch von ihr entkoppelt ist.

Die Trennkupplung 19 ist vorzugsweise vollständig in dem Maschinengehäuse 4 aufgenommen. Ein Aktuator zum Betätigen der Trennkupplung 19, insbesondere also zum Verlagern der Verschiebeklaue 20 zwischen der ersten Stellung und der zweiten Stellung, ist hingegen außerhalb des Maschinengehäuses 4 angeordnet und außen an diesem befestigt. Dies wird durch frei werdenden Platz möglich, der sich durch die Anordnung des Betriebsmitteltanks 5 in dem Maschinengehäuse 4 ergibt.

### BEZUGSZEICHENLISTE:

- 1: Antriebseinrichtung
- 2: Antriebsaggregat
- 3: Abtriebsflansch
- 4: Maschinengehäuse
- 5: Betriebsmitteltank
- 6: Grundkörper
- 7: Abschlussdeckel
- 8: Luftraum
- 9: Maschinengehäusedeckel
- 10: Maschinenwelle
- 11: Saugstutzen
- 12: Trennwand
- 13: Durchtrittsausnehmung
- 14: Überlauföffnung
- 15: Wand
- 16: Bereich
- 17: weitere Maschinenwelle
- 18: Differentialgetriebe
- 19: Trennkupplung
- 20: Verschiebeklaue

## Patentansprüche

1. Antriebseinrichtung (1) für ein Kraftfahrzeug, mit einem Maschinengehäuse (4), in dem ein Betriebsmittelverbraucher, ein Betriebsmitteltank (5) und eine Betriebsmittelpumpe angeordnet sind, wobei in dem Maschinengehäuse (4) ein Luftraum (8) vorliegt, in welchen zumindest eine Maschinenwelle (10) der Antriebseinrichtung (1) hineinragt und der mittels einer Trennwand (12) von dem benachbart zu dem Luftraum (8) in dem Maschinengehäuse (4) ausgebildeten Betriebsmitteltank (5) separiert ist, **dadurch gekennzeichnet, dass** der Betriebsmitteltank (5) lediglich über eine in der Trennwand (12) ausgebildete Überlauföffnung (14) strömungstechnisch an den Luftraum (8) angebunden ist.

2. Antriebseinrichtung nach Anspruch 1, **dadurch gekennzeichnet, dass** die Überlauföffnung (14) zumindest mit einem Teilbereich in einem Bereich der Trennwand (12) vorliegt, der in Richtung des Luftraums (8) geneigt angeordnet ist.

3. Antriebseinrichtung nach einem der vorhergehenden Ansprüche, **dadurch gekennzeichnet, dass** der Betriebsmitteltank (5) im Querschnitt bezüglich einer Drehachse der Maschinenwelle (10) gesehen auf gegenüberliegenden Seiten der Maschinenwelle (10) vorliegt.

4. Antriebseinrichtung nach einem der vorhergehenden Ansprüche, **dadurch gekennzeichnet, dass** der Betriebsmitteltank (5) die Maschinenwelle (10) im Querschnitt gesehen um mindestens 180°, mindestens 195°, mindestens 210° oder mindestens 225° umgreift.

5. Antriebseinrichtung nach Anspruch 1 oder 2, **dadurch gekennzeichnet, dass** im Querschnitt gesehen eine Breite der Überlauföffnung (14) in einer bei bestimmungsgemäßer Anordnung der Antriebseinrichtung (1) horizontalen Richtung höchstens 10 %, höchstens 7,5 %, höchstens 5 % oder höchstens 2,5 % einer maximalen Breite des Betriebsmitteltanks (5) in derselben Richtung über seine gesamte Höhe hinweg entspricht, und/oder dass im Querschnitt gesehen die Breite der Überlauföffnung (14) in einer bei bestimmungsgemäßer Anordnung der Antriebsrichtung (1) horizontalen Richtung höchstens 10 %, höchstens 7,5 %, höchstens 5 % oder höchstens 2,5 % einer in einer senkrecht auf der horizontalen Richtung stehenden vertikalen Richtung vorliegenden Höhe des Betriebsmitteltanks (5) entspricht.

6. Antriebseinrichtung nach einem der vorhergehenden Ansprüche, **dadurch gekennzeichnet, dass** der Betriebsmittelverbraucher über einen Vorlaufkanal, der über eine Vorlaufmündungsöffnung in den Betriebsmitteltank (5) einmündet, und über einen Betriebsmittelsumpf an einen Rücklaufkanal, der über eine Rücklaufmündungsöffnung in den Betriebsmitteltank (5) einmündet, strömungstechnisch angeschlossen ist, wobei im Querschnitt gesehen die Überlauföffnung auf der der Vorlaufmündungsöffnung abgewandten Seite der Rücklaufmündungsöffnung angeordnet ist.

7. Antriebseinrichtung nach Anspruch 7, **dadurch gekennzeichnet, dass** der Rücklaufkanal eine in der Trennwand (12) ausgebildete Durchtrittsausnehmung (13) durchgreift.

8. Antriebseinrichtung nach einem der vorhergehenden Ansprüche, **dadurch gekennzeichnet, dass** der Luftraum (8) im Längsschnitt bezüglich der Drehachse der Maschinenwelle (10) gesehen einerseits von einer Wand (15) des Maschinengehäuses (4) und andererseits von einem an dem Maschinengehäuse (4) befestigten Maschinengehäusedeckel (9) begrenzt ist, wobei - wiederum im Längsschnitt gesehen - die Wand (15) des Maschinengehäuses (4) und der Maschinengehäusedeckel (9) gleichsinnig gekrümmt und/oder angewinkelt sind.

9. Antriebseinrichtung nach einem der vorhergehenden Ansprüche, **dadurch gekennzeichnet, dass** auf einer dem Luftraum (8) abgewandten Seite der Wand (15) des Maschinengehäuses (4) eine Trennkupplung (19) angeordnet ist, über die die Maschinenwelle (10) und/oder eine mit der Maschinenwelle (10) antriebstechnisch gekoppelte weitere Maschinenwelle (17) antriebstechnisch an einen Abtriebsflansch (3) der Antriebsrichtung (1) angeschlossen ist.

## Claims

1. Drive device (1) for a motor vehicle, having a machine housing (4) in which an operating material consumer, an operating material tank (5) and an operating material pump are arranged, wherein in the machine housing (4) there is an air space (8) into which at least one machine shaft (10) of the drive device (1) protrudes and which is separated by a separating wall (12) from the operating material tank (5), which is formed adjacent to the air space (8) in the machine housing (4), **characterized in that** the operating material tank (5) is only fluidically connected to the air space (8) via an overflow opening (14) formed in the separating wall (12).

2. Drive device according to claim 1, **characterized in that** the overflow opening (14) is provided at least with one partial section in an area of the separating wall (12) which is arranged inclined towards the air space (8).

3. Drive device according to any one of the preceding claims, **characterized in that** the operating material tank (5), viewed in cross section with respect to an axis of rotation of the machine shaft (10), is provided on opposite sides of the machine shaft (10).

4. Drive device according to any one of the preceding claims, **characterized in that** the operating material tank (5) encloses the machine shaft (10), viewed in cross section, around at least 180°, at least 195°, at least 210°, or at least 225°.

5. Drive device according to claim 1 or 2, **characterized in that,** viewed in cross section, the width of the overflow opening (14) in a horizontal direction, when the drive device (1) is in the intended arrangement, corresponds to at most 10%, at most 7.5%, at most 5%, or at most 2.5% of a maximum width of the operating material tank (5) in the same direction over its entire height, and/or **in that**, viewed in cross section, the width of the overflow opening (14) in a horizontal direction, when the drive device (1) is in the intended arrangement, corresponds to at most 10%, at most 7.5%, at most 5%, or at most 2.5% of a height of the operating material tank (5) provided in a vertical direction perpendicular to the horizontal direction.

6. Drive device according to any one of the preceding claims, **characterized in that** the operating material consumer is fluidically connected via a flow channel which discharges via a flow orifice opening into the operating material tank (5), and via an operating material sump to a return channel which discharges via a return orifice opening into the operating material tank (5), wherein, viewed in cross section, the overflow opening is arranged on the side of the return orifice opening facing away from the flow orifice opening.

7. Drive device according to claim 7, **characterized in that** the return channel extends through a passage recess (13) formed in the separating wall (12).

8. Drive device according to any one of the preceding claims, **characterized in that** the air space (8), viewed in longitudinal section with respect to the axis of rotation of the machine shaft (10), is delimited, on one side, by a wall (15) of the machine housing (4) and, on the other side, by a machine housing cover (9) fastened on the machine housing (4), wherein, again viewed in longitudinal section, the wall (15) of the machine housing (4) and the machine housing cover (9) are curved and/or angled in the same direction.

9. Drive device according to any one of the preceding claims, **characterized in that** a disconnecting clutch (19) is arranged on a side of the wall (15) of the machine housing (4) facing away from the air space (8), via which disconnecting clutch the machine shaft (10) and/or a further machine shaft (17) drive-coupled to the machine shaft (10) is connected with respect to drive to an output flange (3) of the drive device (1).

## Revendications

1. Appareil d'entraînement (1) pour un véhicule automobile avec un carter de machine (4) dans lequel un consommateur de fluide de fonctionnement, un réservoir de fluide de fonctionnement (5) et une pompe de fluide de fonctionnement sont disposés, dans lequel un espace d'air (8) est présent dans le carter de machine (4), dans lequel au moins un arbre de machine (10) de l'appareil d'entraînement (1) fait saillie et qui est séparé, au moyen d'une paroi de séparation (12), du réservoir de fluide de fonctionnement (5) réalisé dans le carter de machine (4) adjacent à l'espace d'air (8), **caractérisé en ce que** le réservoir de fluide de fonctionnement (5) est relié fluidiquement à l'espace d'air (8) seulement par l'intermédiaire d'une ouverture de débordement (14) réalisée dans la paroi de séparation (12).

2. Appareil d'entraînement selon la revendication 1, **caractérisé en ce que** l'ouverture de débordement (14) est présente au moins avec une zone partielle dans une zone de la paroi de séparation (12) qui est disposée de manière inclinée en direction de l'espace d'air (8).

3. Appareil d'entraînement selon l'une quelconque des revendications précédentes, **caractérisé en ce que** le réservoir de fluide de fonctionnement (5), vu en section transversale par rapport à un axe de rotation de l'arbre de machine (10), est présent sur des côtés opposés de l'arbre de machine (10).

4. Appareil d'entraînement selon l'une quelconque des revendications précédentes, **caractérisé en ce que** le réservoir de fluide de fonctionnement (5) entoure l'arbre de machine (10) d'au moins 180°, au moins 195°, au moins 210° ou au moins 225°, vu en section transversale.

5. Appareil d'entraînement selon la revendication 1 ou 2, **caractérisé en ce que**, vue en section transversale, une largeur de l'ouverture de débordement (14) dans une direction horizontale, lorsque l'appareil d'entraînement (1) est agencé selon l'usage prévu, correspond à au plus 10 %, au plus 7,5 %, au plus 5 % ou au plus 2,5 % d'une largeur maximale du réservoir de fluide de fonctionnement (5) dans la même direction sur toute sa hauteur, et/ou **en ce que**, vue en section transversale, la largeur de l'ouverture de débordement (14) dans une direction horizontale, lorsque l'appareil d'entraînement (1) est agencé selon l'usage prévu, correspond à au plus 10 %, au plus 7,5 %, au plus 5 % ou au plus 2,5 % d'une hauteur du réservoir de fluide de fonctionnement (5) présente dans une direction verticale perpendiculaire à la direction horizontale.

6. Appareil d'entraînement selon l'une quelconque des revendications précédentes, **caractérisé en ce que** le consommateur de fluide de fonctionnement est raccordé fluidiquement par l'intermédiaire d'un canal d'arrivée, qui débouche dans le réservoir de fluide de fonctionnement (5) par l'intermédiaire d'une ouverture d'embouchure d'arrivée, et par l'intermédiaire d'un puisard de fluide de fonctionnement, à un canal de retour, qui débouche dans le réservoir de fluide de fonctionnement (5) par l'intermédiaire d'une ouverture d'embouchure de retour, dans lequel l'ouverture de débordement, vue en section transversale, est disposée sur le côté de l'ouverture d'embouchure de retour opposé à l'ouverture d'embouchure d'arrivée.

7. Appareil d'entraînement selon la revendication 7, **caractérisé en ce que** le canal de retour traverse un évidement de passage (13) formé dans la paroi de séparation (12).

8. Appareil d'entraînement selon l'une quelconque des revendications précédentes, **caractérisé en ce que** l'espace d'air (8), vu en section longitudinale par rapport à l'axe de rotation de l'arbre de machine (10), est délimité d'une part par une paroi (15) du carter de machine (4) et d'autre part par un couvercle de carter de machine (9) fixé sur le carter de machine (4), dans lequel la paroi (15) du carter de machine (4) et le couvercle du carter de machine (9), vus à nouveau en section longitudinale, sont incurvés et/ou inclinés dans le même sens.

9. Appareil d'entraînement selon l'une quelconque des revendications précédentes, **caractérisé en ce que**, sur un côté de la paroi (15) du carter de machine (4) opposé à l'espace d'air (8), un accouplement de séparation (19) est disposé, par l'intermédiaire duquel l'arbre de machine (10) et/ou un arbre de machine supplémentaire (17) couplé en entraînement à l'arbre de machine (10) est raccordé en entraînement à une bride de sortie (3) de la direction d'entraînement (1).
